# EUROPEAN PATENT APPLICATION

(11) **EP 4 807 159 A1**
(43) Date of publication of application: **16.09.2026**
(21) Application number: 26164100.5
(22) Date of filing: 11.03.2026
(51) Int. Cl.: F02C 6/08, F02C 7/224, F02C 9/26

(54) **TURBINE ENGINE COOLED AIR SUPPLY**

(30) Priority: 12.03.2025 US 202519077478
(71) Applicant: RTX Corporation, Farmington, CT 06032 (US)
(72) Inventor: CHAHINE, Nicholas Alexander, NIANTIC, 06357 (US)
(74) Representative: Dehns

(57) **Abstract**

An aircraft has a gas turbine engine. A first fuel flowpath (410) passes from a fuel source (202) to a combustor (70). An air-air heat exchanger has a heat donor leg along a bleed flowpath and a heat recipient leg along a bypass flowpath. An air-fuel heat exchanger (86) has a heat donor leg (120) along the bleed flowpath downstream of the air-air heat exchanger. A second fuel flowpath (420) passes from the fuel source (202) through the air-fuel heat exchanger (86) and includes a heat recipient leg (122) of the air-fuel heat exchanger (86) and at least partially non-overlapping the first fuel flowpath (410). One or more third fuel flowpaths (430) pass from the fuel source (202) through fuel-driven actuators (230). The second fuel flow path (420) and the one or more third fuel flowpaths (430) return to the fuel source (202) or the first fuel flowpath (410).

## Description

### BACKGROUND

The disclosure relates to gas turbine engines. More particularly, the disclosure relates to fuel cooling.

Gas turbine engines (used in propulsion and power applications and broadly inclusive of turbojets, turboprops, turbofans, turboshafts, industrial gas turbines, and the like) divert and cool bleed air for delivery to various engine and aircraft loads.

Example engine loads include: bearing compartment buffering; oil cooling; and electronics cooling. Example non-engine aircraft loads include: airframe cooling; electronics cooling; and cabin and cockpit cooling.

Additionally, various turbine engines use fuel as a hydraulic fluid (fueldraulics) for hydraulic actuators such as exhaust nozzle actuators, bearing swivel actuators, and cooling airflow valves. It is known to use a fueldraulics leakage/return flow as the heat recipient flow in an air-fuel heat exchanger where the heat donor flow is a bleed air flow used for purposes such as bearing compartment buffering.

### SUMMARY

One aspect of the disclosure involves an aircraft comprising: a fuel source; and a gas turbine engine having a compressor a combustor and a turbine. A core flowpath passes sequentially through the compressor, combustor, and turbine. A bleed flowpath passes from the core flowpath to a load. A first fuel flowpath passes from the fuel source to the combustor. An air-air heat exchanger has a heat donor leg along the bleed flowpath and a heat recipient leg along a bypass flowpath. An air-fuel heat exchanger has a heat donor leg along the bleed flowpath downstream of the air-air heat exchanger. A second fuel flowpath passes from the fuel source through the air-fuel heat exchanger and includes a heat recipient leg of the air-fuel heat exchanger and is at least partially non-overlapping the first fuel flowpath. One or more third fuel flowpaths from the fuel source pass through fuel-driven actuators. The second fuel flow path and the one or more third fuel flowpaths return to the fuel source or the first fuel flowpath.

In a further example of any of the foregoing, additionally and/or alternatively: a fuel flowpath leg through a first pump is shared by the first fuel flowpath, the second fuel flowpath, and the one or more third fuel flowpaths; and a fuel flowpath leg of the second fuel flowpath and the one or more third fuel flowpaths through a second fuel pump is shared by the first fuel flowpath.

In a further example of any of the foregoing, additionally and/or alternatively, a fuel flowpath leg through a third pump is shared by the first fuel flowpath, the second fuel flowpath, and the one or more third fuel flowpaths.

In a further example of any of the foregoing, additionally and/or alternatively, the second fuel flow path and the one or more third fuel flowpaths return to the first fuel flowpath between the first fuel pump and the third fuel pump.

A further example of any of the foregoing may additionally and/or alternatively include a main fuel valve along the first fuel flowpath downstream of a location where the second fuel flow path and the one or more third fuel flowpaths branch from the first fuel flowpath.

A further example of any of the foregoing may additionally and/or alternatively include: a return from the main fuel valve to the fuel source.

A further example of any of the foregoing may additionally and/or alternatively include a throttle valve positioned to control fuel flow through the air-fuel heat exchanger.

In a further example of any of the foregoing, additionally and/or alternatively: the first fuel pump is a boost pump; the second fuel pump is a dual vane pump; and the third fuel pump is a main fuel pump.

A further example of any of the foregoing may additionally and/or alternatively include a throttle valve positioned to control fuel flow through the air-fuel heat exchanger.

A further example of any of the foregoing may additionally and/or alternatively include a full authority digital engine control (FADEC) coupled to the throttle valve.

In a further example of any of the foregoing, additionally and/or alternatively, the fuel source comprises a tank.

In a further example of any of the foregoing, additionally and/or alternatively, the load is a buffer chamber for a bearing compartment.

In a further example of any of the foregoing, additionally and/or alternatively, the fuel-driven actuators are selected from the group consisting of: exhaust nozzle actuators, bearing swivel actuators, cooling airflow valves, and compressor and fan variable vane actuators.

A further aspect of the disclosure involves a method for manufacturing the aircraft, the method comprising: starting with the gas turbine engine in a baseline configuration wherein a leakage flowpath from the fuel-driven actuators passes through the heat recipient leg of the air-fuel heat exchanger; and re-plumbing to remove the leakage flowpath from the air-fuel heat exchanger and reroute the leakage flowpath to return to the first flowpath while adding the second fuel flowpath.

A further aspect of the disclosure involves a method for using the aircraft, the method comprising: a full authority digital engine control (FADEC) controlling fuel flow through the second fuel flowpath; and in the air-fuel heat exchanger, transferring heat from air to the fuel flowing along the second fuel flowpath.

A further example of any of the foregoing may additionally and/or alternatively include: the FADEC monitoring a temperature of air exiting the air-fuel heat exchanger; and responsive to an excess monitored temperature increasing fuel flow through the air-fuel heat exchanger.

A further aspect of the disclosure involves a gas turbine engine comprising: a compressor; a combustor; a turbine; a core flowpath sequentially through the compressor, combustor, and turbine; a bypass flowpath; a bleed flowpath from the core flowpath to a load; a first fuel flowpath to the combustor; an air-air heat exchanger having a heat donor leg along the bleed flowpath and a heat recipient leg along the bypass flowpath; an air-fuel heat exchanger having a heat donor leg along the bleed flowpath downstream of the air-air heat exchanger; a second fuel flowpath through the air-fuel heat exchanger and including a heat recipient leg of the air-fuel heat exchanger and at least partially non-overlapping the first fuel flowpath; fuel-driven actuators; and one or more third fuel flowpaths through the fuel-driven actuators. The second fuel flow path and the one or more third fuel flowpaths return to the first fuel flowpath.

A further example of any of the foregoing may additionally and/or alternatively include: a throttle valve positioned to control fuel flow through the air-fuel heat exchanger; a temperature sensor for sensing temperature of air exiting the air-fuel heat exchanger; and a full authority digital engine control (FADEC) coupled to the throttle valve to control the throttle valve responsive to input from the temperature sensor.

A further aspect of the disclosure involves a craft including the gas turbine engine.

In a further example of any of the foregoing, additionally and/or alternatively, the craft is an aircraft wherein the engine is configured to provide thrust, the craft further comprising: a wing.

The details of one or more embodiments are set forth in the accompanying drawings and the description below. Other features, objects, and advantages will be apparent from the description and drawings, and from the claims.

### BRIEF DESCRIPTION OF THE DRAWINGS

FIG. 1 is a schematic view of an engine bay area of an aircraft.
FIG. 2 is a simplified schematic of a fueling system. Like reference numbers and designations in the various drawings indicate like elements.

### DETAILED DESCRIPTION

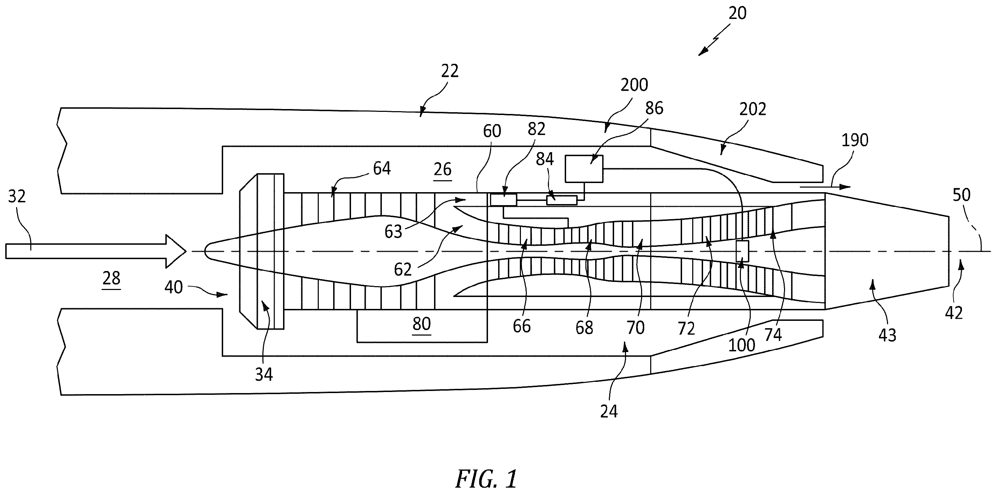

FIG. 1 shows a craft such as an aircraft 20 having a body/fuselage/airframe 22 containing an engine 24 at least partially in an engine bay 26 for producing thrust to propel the aircraft. The example is a crewed aircraft, but alternatives include uncrewed aircraft, watercraft, and the like. The fuselage defines an upstream air inlet of an inlet duct 28 leading from an air inlet (not shown) to the engine bay so that an inlet air flowpath passes an inlet air flow 32 to an inlet 40 of the engine. The example inlet may be at a strut stage 34.

The example engine extends aft to an outlet 42 (e.g., at an exhaust nozzle 43) and has a central longitudinal axis or centerline 50 generally forming the axis of rotation of the engine's rotors.

The engine has a case structure 60 enclosing a gaspath 62 through the engine passing sequentially through an example fan section 64 having one or more fan blade stages, compressor section(s) 66, 68 each having one or more compressor blade stages, a combustor section 70, and turbine section(s) 72, 74 each having one or more stages of turbine blades. The example engine also includes a bypass flowpath 63 branching from the gaspath 62 between fan and compressor sections. The various blade stages of each relevant section may be interspersed with vane stages. The example engine is a two-spool engine having a low speed/pressure spool including the blades of the fan section 64, compressor section 66, and turbine section 74. A high speed/pressure spool includes the blades of the high pressure compressor section 68 and the high pressure turbine section 72. The example combustor sections may include an array of can-type combustors or a single annular combustor.

FIG. 1 also schematically shows, for purposes of illustration, engine-integrated components such as a digital computer 80 (full authority digital engine control (FADEC)) for engine control, and an air-air heat exchanger 82 for bleed air cooling. The cooled bleed air may pass to a load such as buffering a bearing compartment 100.

The bleed flow is cooled in two stages: first by bypass air in the air-air heat exchanger 82; and second by fuel in a fuel-air heat exchanger 86. FIG. 1 also shows a particle separator 84 inline along the bleed flowpath.

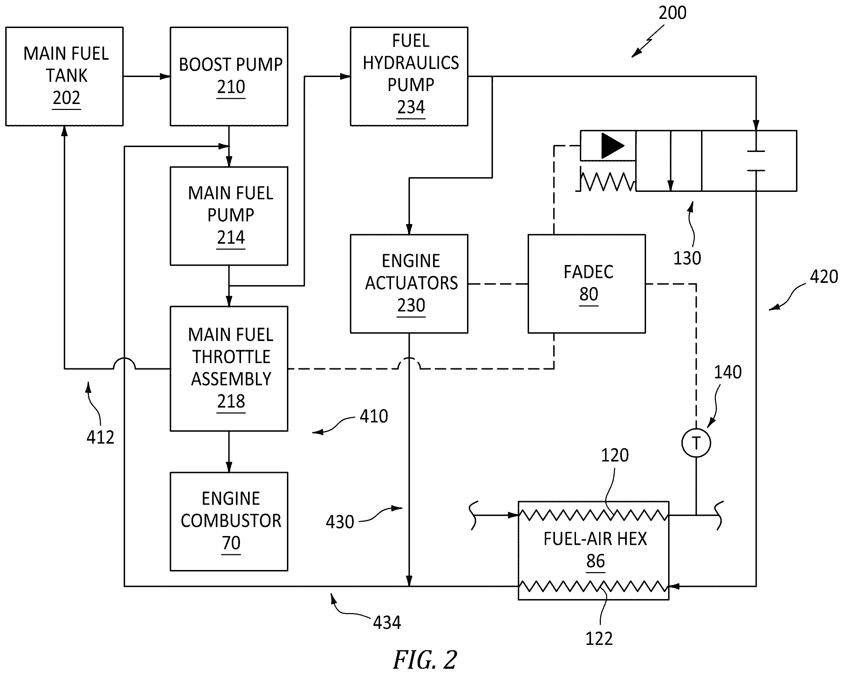

The fuel-air heat exchanger 86 (FIG. 2) thus has a heat donor leg 120 along the bleed flowpath and a heat recipient leg 122 between an associated inlet and outlet along a branch of a fuel flowpath. The fuel flow through the fuel-air heat exchanger is controlled by the FADEC 80 via a throttling valve 130. Several example output/control and/or input/data lines are shown in broken line in FIG. 2. Others are non-illustrated.

FIG. 2 shows a simplified schematic of a fueling system 200. A fuel source is shown in the form of a main fuel tank 202 of the aircraft containing liquid jet fuel. Depending on implementation, such tank may be coupled to more than one such engine. In one group of examples, the illustrated heat exchangers, pumps, valves, and FADEC (discussed below) are engine-integrated while the tank is separate/remote from the engine and may represent one or more tanks such as internal fuselage tanks, wing tanks, and the like. A first fuel flowpath 410 goes from the tank to the combustor 70 (e.g., through cooling nozzles in a bulkhead of the combustor). The first fuel flowpath passes sequentially through a boost pump 210, a main fuel pump 214, and a main fuel throttle valve assembly 218. The boost pump serves to create a baseline pressure. The main fuel pump serves to raise pressure to at least that required for fuel introduction to the combustor. A return flowpath (return) 412 from the main fuel throttle valve assembly to the main fuel tank allows the boost pump and main fuel pump to operate with reserve capacity beyond the instantaneous needs of the combustor and other systems.

The illustrated system also schematically shows the fuel-air heat exchanger 86 along a second fuel flowpath 420 from the main fuel tank. Additionally, fuel-driven actuators 230 are schematically shown along a third fuel flowpath 430. In the illustrated example, the second and third fuel flowpaths branch from the first fuel flowpath between the main fuel pump and the main fuel throttle valve assembly. The second and third fuel flowpaths pass together through a further pump 234 (e.g., a dual vane pump) before splitting and then rejoining along a return leg 434. The return leg rejoins the first fuel flowpath between the boost pump and the main fuel pump. The further pump 234 raises the pressure to a high enough level to power the fueldraulic actuators.

The example engine actuators include hydraulic actuators such as exhaust nozzle actuators, bearing swivel actuators, and cooling airflow valves. The fuel-air heat exchanger throttling valve 130 is positioned along the second flowpath under control of the FADEC. As is discussed further below, the fuel-air heat exchanger throttling valve may be controlled in response to an input from an air temperature sensor 140 measuring the temperature of air delivered from the fuel-air heat exchanger to the load. In a basic implementation, the FADEC 80 may open the valve 130 to increase fuel flow through the heat exchanger 86 fuel leg 122 when temperature measured at by the sensor 140 (e.g., thermocouple or thermistor) exceeds a target maximum and my oppositely throttle down flow when measured temperature falls below a target minimum.

In a further control example, many air systems have system limitations due to high temperatures caused by specific altitudes (ALT), Mach number (MN), and day types (Hot Day/1% Hot Day) which correspond to specific locations in a flight envelope.

The FADEC can be programmed with the specific flight envelope range that drives air temperatures beyond requirement levels or with specific air temperatures that meet a system threshold. Once within these parameters the FADEC can throttle (meter flow) to ramp up fuel flowrate.

As the airframe approaches these pinch points for the air system the FADEC can meter additional fuel flow to increase the air temperature difference across the heat exchanger leg 120 lowering air system temperatures.

As the airframe changes its sustained flight and falls outside the FADEC logic that controls the need for increasing fuel flow, the FADEC will meter flow to the throttling valve's preset default position to maintain a sustained level of cooling across the leg 120.

The illustrated configuration is schematic and illustrative. Various of the pumps may represent complex pump assemblies. Additional flowpaths may also be provided. Depending upon the engine use, additional aspects may include augmenter/reheat fuel use.

Component materials and manufacture techniques and assembly techniques may be otherwise conventional.

The use of "first", "second", and the like in the following claims is for differentiation within the claim only and does not necessarily indicate relative or absolute importance or temporal order. Similarly, the identification in a claim of one element as "first" (or the like) does not preclude such "first" element from identifying an element that is referred to as "second" (or the like) in another claim or in the description.

One or more embodiments have been described. Nevertheless, it will be understood that various modifications may be made. For example, when applied to an existing baseline configuration, details of such baseline may influence details of particular implementations. Accordingly, other embodiments are within the scope of the following claims.

## Claims

1. An aircraft (20) comprising:
a fuel source (202);
a gas turbine engine (24) having:
a compressor (66);
a combustor (70);
a turbine (72; 74);
a core flowpath (62) sequentially through the compressor (66), combustor (70), and turbine (72; 74); and
a bypass flowpath (63);
a bleed flowpath from the core flowpath (62) to a load;
a first fuel flowpath (410) from the fuel source (202) to the combustor (70);
an air-air heat exchanger (82) having a heat donor leg along the bleed flowpath and a heat recipient leg along the bypass flowpath (63);
an air-fuel heat exchanger (86) having a heat donor leg (120) along the bleed flowpath downstream of the air-air heat exchanger (82);
a second fuel flowpath (420) from the fuel source (202) through the air-fuel heat exchanger (86) and including a heat recipient leg (122) of the air-fuel heat exchanger (86) and at least partially non-overlapping the first fuel flowpath (410);
fuel-driven actuators (230); and
one or more third fuel flowpaths (430) from the fuel source (202) through the fuel-driven actuators (230),
wherein:
the second fuel flowpath (420) and the one or more third fuel flowpaths (430) return to the fuel source (202) or the first fuel flowpath (410).

2. The aircraft of claim 1 wherein:
a fuel flowpath leg through a first pump (210) is shared by the first fuel flowpath (410), the second fuel flowpath (420), and the one or more third fuel flowpaths (430); and
a fuel flowpath leg of the second fuel flowpath (420) and the one or more third fuel flowpaths (430) through a second fuel pump (234) is shared by the first fuel flowpath (410).

3. The aircraft of claim 2 wherein:
a fuel flowpath leg through a third pump (214) is shared by the first fuel flowpath (410), the second fuel flowpath (420), and the one or more third fuel flowpaths (430).

4. The aircraft of claim 3 wherein:
the second fuel flowpath (420) and the one or more third fuel flowpaths (430) return to the first fuel flowpath (410) between the first fuel pump (210) and the third fuel pump (214).

5. The aircraft of claim 3 or 4 further comprising:
a main fuel valve (218) along the first fuel flowpath (410) downstream of a location where the second fuel flowpath (420) and the one or more third fuel flowpaths (430) branch from the first fuel flowpath (410).

6. The aircraft of claim 5 further comprising:
a return from the main fuel valve (218) to the fuel source (202).

7. The aircraft of any of claims 2 to 6 wherein:
the first fuel pump (210) is a boost pump (210);
the second fuel pump (234) is a dual vane pump (234); and
the third fuel pump (214) is a main fuel pump (214).

8. The aircraft of any preceding claim further comprising:
a throttle valve (130) positioned to control fuel flow through the air-fuel heat exchanger (86),
optionally wherein the aircraft further comprises:
a full authority digital engine control (FADEC) (80) coupled to the throttle valve (130).

9. The aircraft of any preceding claim wherein:
the fuel source (202) comprises a tank (202).

10. The aircraft of any preceding claim wherein:
the load is a buffer chamber for a bearing compartment (100).

11. The aircraft of any preceding claim wherein the fuel-driven actuators (230) are selected from the group consisting of:
exhaust nozzle actuators, bearing swivel actuators, cooling airflow valves, and compressor and fan variable vane actuators.

12. A method for manufacturing the aircraft (20) of any preceding claim, the method comprising:
starting with the gas turbine engine (24) in a baseline configuration wherein a leakage flowpath from the fuel-driven actuators (230) passes through the heat recipient leg (122) of the air-fuel heat exchanger (86); and
re-plumbing to remove the leakage flowpath from the air-fuel heat exchanger (86) and reroute the leakage flowpath to return to the first flowpath (410) while adding the second fuel flowpath (420).

13. A method for using the aircraft (20) of any preceding claim, the method comprising:
a or the full authority digital engine control (FADEC) (80) controlling fuel flow through the second fuel flowpath (420); and
in the air-fuel heat exchanger (86), transferring heat from air to the fuel flowing along the second fuel flowpath (420),
optionally wherein the method further comprises:
the FADEC (80) monitoring a temperature of air exiting the air-fuel heat exchanger (86); and
responsive to an excess monitored temperature increasing fuel flow through the air-fuel heat exchanger (86).

14. A gas turbine engine (24) comprising:
a compressor (66);
a combustor (70);
a turbine (72; 74);
a core flowpath (62) sequentially through the compressor (66), combustor (70), and turbine (72; 74);
a bypass flowpath (63);
a bleed flowpath from the core flowpath (62) to a load;
a first fuel flowpath (410) to the combustor (70);
an air-air heat exchanger (82) having a heat donor leg along the bleed flowpath and a heat recipient leg along the bypass flowpath (63);
an air-fuel heat exchanger (86) having a heat donor leg (120) along the bleed flowpath downstream of the air-air heat exchanger (82);
a second fuel flowpath (420) through the air-fuel heat exchanger (86) and including a heat recipient leg (122) of the air-fuel heat exchanger (86) and at least partially non-overlapping the first fuel flowpath (410);
fuel-driven actuators (230); and
one or more third fuel flowpaths (430) through the fuel-driven actuators (230),
wherein:
the second fuel flowpath (420) and the one or more third fuel flowpaths (430) return to the first fuel flowpath (410),
optionally wherein the gas turbine engine further comprises:
a throttle valve (130) positioned to control fuel flow through the air-fuel heat exchanger (86);
a temperature sensor (140) for sensing temperature of air exiting the air-fuel heat exchanger (86); and
a full authority digital engine control (FADEC) (80) coupled to the throttle valve (130) to control the throttle valve (130) responsive to input from the temperature sensor (140).

15. A craft (20) including the gas turbine engine (24) of claim 14, optionally wherein the craft (20) is an aircraft (20) wherein the engine (24) is configured to provide thrust, the craft (20) further comprising:
a wing.
